**Europäisches Patentamt**

**European Patent Office**

**Office européen des brevets**

(19)

(11) Veröffentlichungsnummer : **0 151 949**
**B1**

(12) **EUROPÄISCHE PATENTSCHRIFT**

(45) Veröffentlichungstag der Patentschrift :
09.09.87

(51) Int. Cl.⁴ : **B 66 B  1/34**, G 01 G  19/12

(21) Anmeldenummer : 85100413.5

(22) Anmeldetag : 16.01.85

(54) Lastmesseinrichtung für eine Aufzugskabine.

(30) Priorität : 14.02.84 CH 707/84

(43) Veröffentlichungstag der Anmeldung :
21.08.85 Patentblatt 85/34

(45) Bekanntmachung des Hinweises auf die Patenterteilung : 09.09.87 Patentblatt 87/37

(84) Benannte Vertragsstaaten :
AT DE FR GB

(56) Entgegenhaltungen :
EP-A- 0 030 134
DE-B- 1 136 467
GB-A-   467 348
GB-A- 1 159 524
GB-A- 1 281 641
US-A- 3 512 595
US-A- 4 078 623
US-A- 4 223 752

(73) Patentinhaber : INVENTIO AG
Seestrasse 55
CH-6052 Hergiswil NW (CH)

(72) Erfinder : Schlegel, Urs, Dipl. -Ing.
Kapfweid 13
CH-6020 Emmenbrücke (CH)
Erfinder : Tomse, Ljudevit, Dipl. -ing.
Spechtenstrasse
CH-6036 Dierikon (CH)
Erfinder : Wenger, Urs
Geissmattstrasse 57
CH-6004 Luzern (CH)

## Beschreibung

Die Erfindung betrifft eine Lastmesseinrichtung für eine Aufzugskabine mit Dehnungsmessstreifen, die zu einer Brückenschaltung zusammengeschaltet sind, und mit einem Verstärker, der eingangsseitig mit der Brückenschaltung und ausgangsseitig mit der Aufzugssteuerung verbunden ist.

Lastmesseinrichtungen bei Aufzügen haben den Zweck, für die Steuerung erforderliche, lastproportionale Signale zu erzeugen. Bei einfacheren Aufzügen genügen in der Regel Signale, welche die Zustände « Besetzt », « Vollast » und « Ueberlast » melden. Darüber hinaus sind für anspruchsvollere Steuerungen feiner abgestufte oder stufenlos erzeugte Lastsignale notwendig. Mit einer durch die Schweizer Patentschrift Nr. 425 134 bekannt gewordenen Einrichtung kann diese Forderung erfüllt werden. Hierbei ist der Kabinenboden über Federn, deren Einfederung für eine lastproportionale Signalerzeugung ausgewertet wird, auf einem Bodenrahmen der Aufzugskabine abgestützt. Für die Auswertung der Einfederung wird unter anderem vorgeschlagen, mittels eines Hebelsystemes einen in der Mitte des Kabinenbodens liegenden, beweglichen Messpunkt zu bilden, dessen Auslenkung dem Mittelwert der Einfederungen aller Federn proportional ist. Der bewegliche Messpunkt kann nun beispielsweise mit dem Tauchanker einer Tauchspule oder einem Dehnungsmessstreifen verbunden sein, so dass eine stufenlose, lastproportionale Signalerzeugung möglich ist. Diese Einrichtung ist relativ kompliziert und teuer, wobei wegen der Trägheit und Unempfindlichkeit im unteren Lastbereich eine einwandfreie Signalisation kleinerer Laständerungen kaum möglich ist.

Im Fachbuch Elektronik, 2. Teil, Verlag Europa-Lehrmittel, Wuppertal, 4. Auflage, 1978, Seiten 14 und 15, ist eine Lastmesseinrichtung gemäss Oberbegriff angegeben, bei der die Dehnungsmessstreifen in Kraftmessdosen eingebaut sind. Derartige im Handel erhältliche Kraftmessdosen sind relativ teuer und daher für kostengünstige Aufzüge nicht geeignet. Ausserdem ist auch bei dieser Einrichtung eine einwandfreie Ermittlung kleiner Laständerungen im unteren Lastbereich nicht ohne weiteres möglich.

Der Erfindung liegt die Aufgabe zugrunde eine Lastmesseinrichtung gemäss Oberbegriff zu schaffen, die vorstehend beschriebene Nachteile nicht aufweist und mittels welcher insbesondere die Laständerungen im unteren Lastbereich mit der erforderlichen Genauigkeit ermittelt werden können, wobei jedoch ein grösstmöglicher Gesamtlastbereich erfasst werden soll.

Diese Aufgabe wird durch die im Patentanspruch gekennzeichnete Erfindung gelöst. Hierbei werden die Dehnungsmessstreifen unmittelbar an Bauteilen der Aufzugskabine befestigt, die durch die zu messende Last auf Biegung beansprucht werden. Der Verstärker der Lastmesseinrichtung weist bei kleinen Lasten eine grössere Verstärkung auf als bei grösseren Lasten, wobei sein Ausgang als spannungsgesteuerte Stromquelle ausgebildet ist.

Die mit der Erfindung erzielten Vorteile sind in der einfachen, gegen mechanische Beschädigungen und Feuchtigkeit geschützten Anordnung der Dehnungsmessstreifen zwischen Kabinenboden und Bodenrahmen zu sehen, so dass auf Kraftmessdosen verzichtet werden kann. Die steilere Ausgangskennlinie des Verstärkers im unteren Lastbereich erlaubt es, dass auch kleinste Laständerungen in diesem Bereich erfasst werden können. Die kleinere Verstärkung bei grösseren Lasten bewirkt, dass bei gegebener Ausgangsaussteuerbarkeit des Verstärkers ein grösserer Lastbereich erfasst werden kann. Mit der Ausbildung des Verstärkerausganges als spannungsgesteuerte Stromquelle wird erreicht, dass die Lastmesswerte weitgehend unbeeinflusst an die Aufzugssteuerung übertragen werden.

Im folgenden wird die Erfindung anhand eines auf der Zeichnung dargestellten Ausführungsbeispieles näher erläutert. Es zeigen :

Figur 1   eine in einem Aufzugsschacht geführte Aufzugskabine mit der erfindungsgemässen Lastmesseinrichtung,

Figur 2   ein Detail der Lastmesseinrichtung in gegenüber der Fig. 1 vergrösserter Darstellung,

Figur 3   ein   Schaltschema · der   Lastmesseinrichtung und

Figur 4   die Ausgangskennlinie eines Verstärkers der Lastmesseinrichtung.

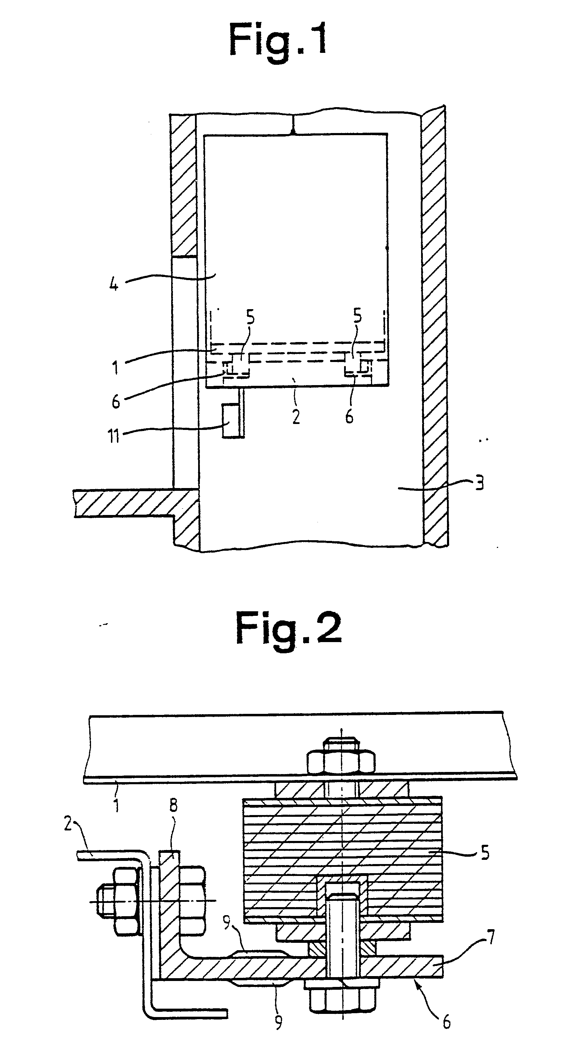

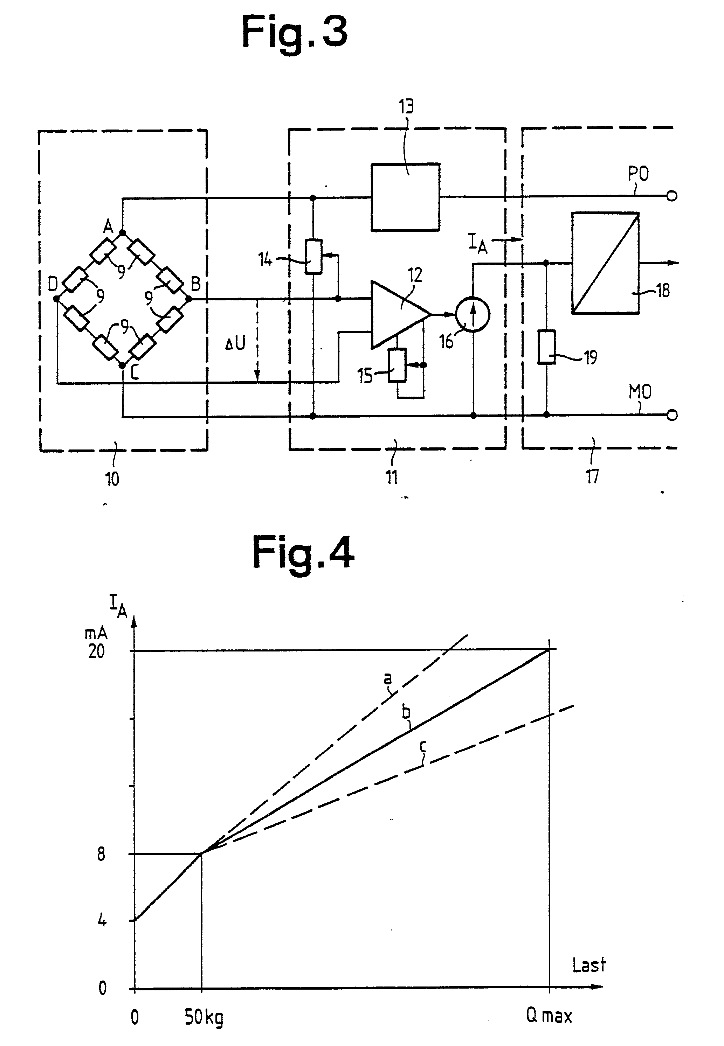

In den Fig. 1 und 2 sind mit 1 der Kabinenboden und mit 2 der Bodenrahmen einer in einem Aufzugsschacht 3 geführten Aufzugskabine 4 bezeichnet. Der Kabinenboden 1 stützt sich über Isolierelemente 5 auf horizontal verlaufenden Schenkeln 7 von Winkeln 6 ab, deren vertikal verlaufende Schenkel 8 mit dem Bodenrahmen 2 verschraubt sind. An der oberen und unteren Seite des horizontal verlaufenden Schenkels 7 eines jeden Winkels 6 ist je ein Dehnungsmessstreifen 9 befestigt. Es sind vier Winkel 6 vorgesehen, die an den vier Ecken des Bodenrahmens 2 angeordnet sind. Die Dehnungsmessstreifen 9 der vier Winkel 6 sind den vier Knoten A, B, C, D, einer Brückenschaltung 10 (Fig. 3) zugeordnet, die mit einem nachfolgend an Hand der Fig. 3 beschriebenen Verstärker 11 verbunden ist. Der Verstärker 11 ist türseitig unter der Aufzugskabine 4 am Bodenrahmen 2 befestigt, so dass er zum Zwecke der Montage und Justierung vom Stockwerk aus bei entsprechender Position der Aufzugskabine 4 gut zugänglich ist.

Gemäss Fig. 3 weist der Verstärker 11 einen Operationsverstärker 12 auf, dessen Eingänge am Nullzweig der Brückenschaltung 10 angeschlossen sind. Die Brückenschaltung 10 wird über einen Leiter PO und eine Stabilisierungsschaltung 13 sowie einen weiteren Leiter MO von einer nicht dargestellten Spannungsquelle gespeist und mittels eines ebenfalls an dieser Spannungsquelle angeschlossenen Spannungsteilers 14 abgeglichen. Mit 15 ist ein die Verstärkung bestimmendes Schaltungsglied symbolisiert, welches bei Auftreten einer Eingangsspannung $\Delta$U, die beispielsweise einer Last von 50 kg entspricht, mittels einer nicht dargestellten Triggerschaltung auf einen eine kleinere Verstärkung bewirkenden Wert umgeschaltet wird. Dem Ausgang des Operationsverstärkers 12 ist eine mit 16 symbolisierte spannungsgesteuerte Stromquelle nachgeschaltet, so dass am Ausgang des Verstärkers 11 ein lediglich von der Ausgangsspannung des Operationsverstärkers 12 abhängiger eingeprägter Ausgangsstrom $I_A$ auftritt. Mit 17 ist eine, beispielsweise mittels eines Digitalrechners realisierte Aufzugsteuerung bezeichnet. Der Ausgang des Verstärkers 11 ist mit dem Eingang eines AD-Wandlers 18 der Aufzugssteuerung 17 verbunden, wobei die Eingangsspannung über einen zwischen dem Eingang und dem weiteren Leiter MO geschalteten Widerstand 19 abgegriffen wird.

Bei Belastung des Kabinenbodens 1 werden die an den oberen Seiten der horizontalen Schenkel 7 befestigten Dehnungsmessstreifen 9 gestreckt und die an den unteren Seiten befestigten gestaucht. Durch die damit bewirkte Widerstandsänderung gerät die vorher abgeglichene Brücke 10 aus dem Gleichgewicht, so dass am Eingang des Verstärkers 11 eine der Belastung proportionale Spannungsdifferenz $\Delta$U und an dessen Ausgang ein dieser Spannungsdifferenz proportionaler, eingeprägter Ausgangsstrom $I_A$ auftritt (Fig. 3). Gemäss Fig. 4 verläuft die Ausgangskennlinie des Verstärkers 11 bis zu einer Last von beispielsweise 50 kg steiler, so dass kleine Laständerungen einwandfrei erfasst werden können. Im grösseren Lastbereich verläuft die Ausgangskennlinie flacher, wobei je nach Nennlast $Q_{max}$ und Ausgangsaussteuerbarkeit des Verstärkers 11 Ausgangskennlinien a, b, c verschiedener Steilheiten realisierbar sind.

## Patentansprüche

1. Lastmesseinrichtung für eine Aufzugskabine mit Dehnungsmessstreifen (9), die zu einer Brückenschaltung (10) zusammengeschaltet sind, und mit einem Verstärker (11), der eingangsseitig mit der Brückenschaltung (10) und ausgangsseitig mit der Aufzugssteuerung (17) verbunden ist, dadurch gekennzeichnet, dass die Dehnungsmessstreifen (9) unmittelbar an Bauteilen der Aufzugskabine (4) befestigt sind, die durch die zu messende Last beansprucht werden, dass der Verstärker (11) bei kleinen Lasten eine grössere Verstärkung aufweist als bei grösseren Lasten, und dass der Ausgang des Verstärkers (11) als spannungsgesteuerte Stromquelle (16) ausgebildet ist.

2. Lastmesseinrichtung nach Patentanspruch 1, dadurch gekennzeichnet, dass die Bauteile auf Biegung beansprucht werden.

3. Lastmesseinrichtung nach Patentanspruch 2, dadurch gekennzeichnet, dass die Bauteile Winkel (6) sind, deren vertikale Schenkel (8) am Bodenrahmen (2) der Aufzugskabine (4) befestigt sind und auf deren horizontalen Schenkeln (7) der Kabinenboden (1) mittels Isolierelementen (5) abgestützt ist, wobei je ein Dehnungsmessstreifen (9) an der oberen und der unteren Seite des horizontalen Schenkels (7) eines jeden Winkels (6) befestigt ist.

4. Lastmesseinrichtung nach Patentanspruch 1 oder 3, dadurch gekennzeichnet, dass an jeder der vier Ecken des Bodenrahmens (2) ein Winkel (6) vorgesehen ist und die Dehnungsmessstreifen (9) der vier Winkel (6) den vier Knoten (A, B, C, D) der Brückenschaltung (10) zugeordnet sind.

5. Lastmesseinrichtung nach Patentanspruch 1, dadurch gekennzeichnet, dass der Verstärker (11) eine Triggerschaltung aufweist, welche bei Auftreten einer bestimmten Eingangsspannung ($\Delta$U) ein die Verstärkung bestimmendes Schaltungsglied (15) auf einen eine kleinere Verstärkung bewirkenden Wert umschaltet.

6. Lastmesseinrichtung nach Patentanspruch 5, dadurch gekennzeichnet, dass die bestimmte Eingangsspannung ($\Delta$U) einer Last von 50 Kg entspricht.

7. Lastmesseinrichtung nach Patentanspruch 1, dadurch gekennzeichnet, dass der Verstärker (11) türseitig unter der Aufzugskabine (4) befestigt ist.

## Claims

1. Load-measuring equipment for a lift cage with strain gauges (9), which have been connected together into a bridge circuit (10), and with an amplifier (11), which is connected at the input side with the bridge circuit (10) and at the output side with the lift control (17), characterised thereby, that the strain gauges (9) are fastened directly to components of the lift cage (4), which are stressed by the load to be measured, that the amplifier (11) displays a greater amplification for small loads than for greater loads and that the output of the amplifier (11) is constructed as voltage-controlled current source (16).

2. Load-measuring equipment according to patent claim 1, characterised thereby, that the components are stressed in bending.

3. Load-measuring equipment according to patent claim 2, characterised thereby, that the components are brackets (6), the vertical limbs (8) of which are fastened at the bottom frame (2) of the lift cage (4) and on the horizontal limbs (7) of which bears the cage bottom (1) by means of isolating elements (5), wherein a respective strain gauge (9) is fastened at the upper and the lower side of the horizontal limb (7) of each bracket (6).

4. Load-measuring equipment according to patent claim 1 or 3, characterised thereby, that a bracket (6) is provided at each of the four corners of the bottom frame (2) and the strain gauges (9) of the four brackets (6) are associated with the four junctions (A, B, C, D) of the bridge circuit (10).

5. Load-measuring equipment according to patent claim 1, characterised thereby, that the amplifier (11) displays a trigger circuit which on the appearance of a certain input voltage (ΔU) switches a circuit member (15), which determines the amplification, over to a value effecting a smaller amplification.

6. Load-measuring equipment according to patent claim 5, characterised thereby, that the certain input voltage (ΔU) corresponds to a load of 50 kilograms.

7. Load-measuring equipment according to patent claim 1, characterised thereby, that the amplifier (11) is fastened below the lift cage (4) at the door side.

**Revendications**

1. Dispositif de mesure de charge pour une cabine d'ascenseur comportant des bandes extensométriques (9) électriquement connectées en un montage en pont (10) et un amplificateur (11) relié, côté entrée, au montage en pont (10) et, côté sortie, à la commande (17) de l'ascenseur, caractérisé en ce que les bandes extensométriques (9) sont fixées directement à des éléments de construction de la cabine d'ascenseur (4) qui sont sollicités par la charge à mesurer, en ce que l'amplificateur (11) présente une amplification plus grande dans le cas de petites charges que dans le cas de charges plus importantes, et en ce que la sortie de l'amplificateur (11) est formée en tant que source de courant (16) commandée par tension.

2. Dispositif de mesure de charge selon la revendication 1, caractérisé en ce que les éléments de construction sont sollicités à la flexion.

3. Dispositif de mesure de charge selon la revendication 2, caractérisé en ce que les éléments de construction sont des équerres (6) dont les ailes verticales (8) sont fixées au châssis de base (2) de la cabine d'ascenseur (4) et sur les ailes horizontales (7) desquelles le plancher de cabine (1) s'appuie au moyen d'éléments isolants (5), une bande extensométrique (9) étant fixée sur le côté supérieur et une bande extensométrique (9) fixée sur le côté inférieur de l'aile horizontale (7) de chacune des équerres (6).

4. Dispositif de mesure de charge selon la revendication 1 ou la revendication 3, caractérisé en ce qu'une équerre (6) est prévue à chacun des quatre angles du châssis de base (2) et que les bandes extensométriques (9) des quatre équerres (6) sont associées aux quatre nœuds (A, B, C, D) du montage en pont (10).

5. Dispositif de mesure de charge selon la revendication 1, caractérisé en ce que l'amplificateur (11) comporte un montage de déclenchement qui, à l'apparition d'une tension d'entrée donnée (ΔU), commute un élément de circuit (15) déterminant l'amplification sur une valeur provoquant une amplification plus faible.

6. Dispositif de mesure de charge selon la revendication 5, caractérisé en ce que la tension d'entrée donnée (ΔU) correspond à une charge de 50 kg.

7. Dispositif de mesure de charge selon la revendication 1, caractérisé en ce que l'amplificateur (11) est fixé sous la cabine d'ascenseur (4) du côté porte.

# Fig.1

# Fig.2

# Fig.3

# Fig.4